# EUROPÄISCHE PATENTSCHRIFT

(11) **EP 0 611 981 B1**
(45) Veröffentlichungstag und Bekanntmachung des Hinweises auf die Patenterteilung: **11.06.1997**
(21) Anmeldenummer: 94101684.2
(22) Anmeldetag: 07.02.1994
(51) Int. Cl.: G02F 1/1337, G02F 1/1335

(54) **Optisches Bauelement**
Optical device
Dispositif optique

(30) Priorität: 17.02.1993 CH 488/93
(43) Veröffentlichungstag der Anmeldung: 24.08.1994
(73) Patentinhaber: F. HOFFMANN-LA ROCHE AG, 4002 Basel (CH)
(72) Erfinder: Schadt, Martin, CH-4411 Seltisberg (CH); Schmitt, Klaus, D-79541 Lörrach (DE)
(74) Vertreter: Buntz, Gerhard

(56) Entgegenhaltungen:
- EP-A- 0 331 233
- EP-A- 0 387 059
- EP-A- 0 423 881
- EP-A- 0 525 477
- EP-A- 0 525 478
- JAPANESE JOURNAL OF APPLIED PHYSICS Bd. 31, Nr. 1 , 1992, SS 2155-2164; M. SCHADT et al.: 'Surface-induced parallel alignment of liquid crystals by linearly polymerized photopolymers'

## Beschreibung

Die Erfindung betrifft ein optisches Bauelement mit einem anisotropen Film vernetzter flüssigkristalliner Monomere mit lokal unterschiedlicher Orientierung der Flüssigkristallmoleküle. Die Erfindung betrifft ferner die Herstellung solcher Bauelemente.

Anisotrope transparente oder farbige Polymernetzwerkschichten mit punktweise vorgebbarer räumlicher Orientierung der optischen Achse sind im Bereich der Displaytechnologie und der integrierten Optik von grossem Interesse.

Seit einigen Jahren sind Substanzen bekannt, die diese Eigenschaft im Prinzip besitzen, nämlich gewisse vernetzbare flüssigkristalline Diacrylate und Diepoxide. Diese Substanzen lassen sich als Monomere, d.h. vor der Vernetzung, in Zellen mit Hilfe konventioneller Orientierungsschichten oder unter Einwirkung äusserer Felder, z.B. magnetischer oder elektrischer Felder, in der LC-Phase orientieren und in einem zweiten Schritt photovernetzen, ohne die im monomeren Zustand eingeprägte Orientierung zu verlieren.

Schichtstrukturen dieser Art sind z.B. aus EP-A 331 233 bekannt. Ihre Herstellung erfolgt indem eine Monomerschicht im äusseren Feld orientiert und dann in einem Teilbereich durch eine Maske hindurch bestrahlt wird. Dabei wird nur im bestrahlten Bereich die Vernetzung ausgelöst. Anschliessend wird die Richtung des äusseren Feldes geändert und die noch nicht vernetzten Monomerbereiche werden bezüglich der neuen Feldrichtung reorientiert. Daraufhin wird auch dieser Bereich beleuchtet und damit vernetzt. Es ist klar, dass dieses Verfahren nicht zu einer örtlich hochaufgelösten Orientierungsstruktur führen kann, da die radikalische Vernetzungsreaktion durch die Abschattung der Maske nicht scharf begrenzt wird.

Orientierungsschichten spielen im Aufbau von Flüssigkristallanzeigezellen eine entscheidende Rolle. Sie bestimmen die Orientierung des Flüssigkristallmaterials in der Zelle, d.h. die Lage der optischen Achse und damit wesentlich die Realisierbarkeit von Flüssigkristallanzeigezellen, z.B. sog. TN - oder STN - Zellen. Normalerweise bestehen diese Orientierungsschichten aus geeignet geriebenen Polyimid- oder PVA-Schichten oder aus schrägbedampften Si0ₓ-Schichten. Die Verfahren zur Herstellung solcher Schichten erlauben im wesentlichen nur einheitliche Orientierungen über makroskopische Flächen. Für viele denkbare Anwendungen ist es aber wünschenswert, die Orientierung der LC-Schicht auch in mikroskopischen Bereichen beliebig, z.B. periodisch zu variieren.

Seit neuerer Zeit sind Verfahren bekannt, die erlauben, Orientierungsschichten mit örtlich variablen Orientierungseigenschaften zu erzeugen. So ist z.B. in US-A 4,974,941 die Orientierung dichroitischer im Polymer eingelagerter Farbstoffmoleküle mit Hilfe photolithographischer Verfahren beschrieben. Diese Methode erzeugt eine thermisch nicht stabile Orientierung der Chromophore und ist daher für die Orientierung der hier verwendeten, vernetzbaren Flüssigkristalle nicht anwendbar.

Der Erfindung liegt die Aufgabe zugrunde, verbesserte Schichtstrukturen der vorstehend erwähnten Art für optische und elektrooptische Bauelemente bereitzustellen.

Erfindungsgemäss wird dies gelöst durch eine mit der Flüssigkristallschicht in Kontakt befindliche Orientierungsschicht aus einem photoorientier. baren Polymernetzwerk (PPN). Die Herstellung dieser Schichtstruktur erfolgt nach der Erfindung dadurch, dass die flüssigkristallinen Monomere durch die Wechselwirkung mit der PPN-Schicht orientiert und die Orientierungen in einem anschliessenden Vernetzungsschritt fixiert werden.

Die Orientierungsschichten bestehen aus photoorientierbaren Polymernetzwerkschichten (PPN), welche durch selektive Bestrahlung mit polarisiertem UV-Licht hochaufgelöste Orientierungspattern auf LC-Schichten induzieren. Es handelt sich hierbei z.B. um Zimtsäurederivate, wie sie in den schweizerischen Patentanmeldungen Nr. 2244/91 und 2246/91 und im Artikel von M. Schadt et al., Jpn. J. Appl. Phys., Vol. 31 (1992), Seiten 2155-2164, beschrieben wurden. Der Orientierungsprozess beruht auf der photoinduzierten Orientierung und Dimerisierung der Polymerseitenketten. Im Gegensatz zu dem in US-A 4,974,941 beschriebenen Verfahren wird in dem hier vorliegenden Fall das Orientierungsmuster durch die Dimerisierungsreaktion, die die Polymerschicht in ein orientiertes Polymernetzwerk überführt, stabilisiert. Zusätzlich wird die Löslichkeit der Polymerschicht drastisch reduziert.

Dass es gelingt, mit diesen PPN-Polymeren auch gewisse vernetzbare LC-Monomerschichten strukturiert zu orientieren und zudem orientierungserhaltend zu vernetzen, war überraschend. Als besonders geeignet erweisen sich hierfür PPNs mit hohem Glaspunkt, wie z.B.:
1) Ro 47-7269
   Tg = 156°C 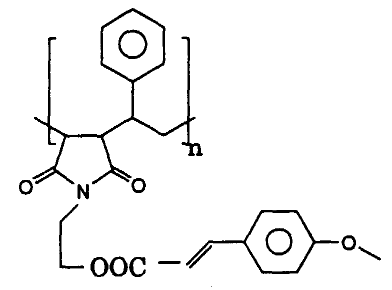
2) Tg = 133°C 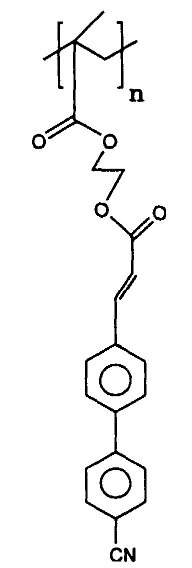
3) Ro 470-3054
   Tg = 105°C 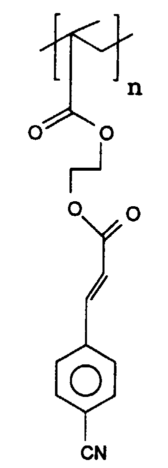
und LC-Monomerschichten aus Diacrylatkomponenten, wie z.B. 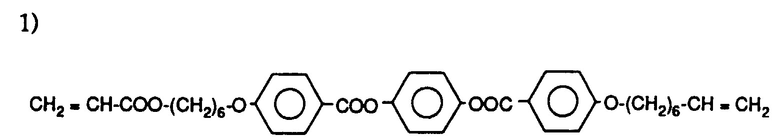 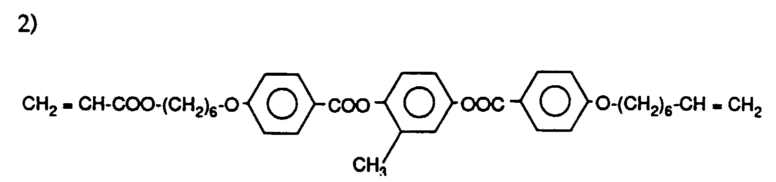 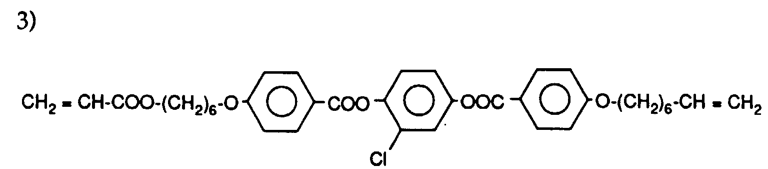 und deren Mischungen.

Die erfindungsgemässe Kombination aus PPN und vernetzbaren LC-Monomeren wird im folgenden auch Hybridschicht genannt. Sie ermöglicht zum ersten Mal, die optisch eingeschriebene hochaufgelöste Orientierungsstruktur einer dünnen Polymerschicht in eine doppelbrechende dichtvernetzte Polymerschicht beliebiger Dicke zu übertragen. Einige nützliche Eigenschaften solcher Hybridschichten seien aufgezählt. Sie sind unlöslich für viele Lösungsmittel, insbesondere für niedermolekulare LC, sie sind thermisch stabil, ihre optische Anisotropie ist nahezu temperaturunabhängig, die optische Anisotropie kann grosse Werte von Δ n>.2 die örtliche Auflösung der Orientierungsstruktur wird bestimmt durch das PPN, sie liegt also im Submikronbereich.

Durch das Zusammenwirken von photolithographisch strukturierter PPN-Beschichtung und stark anisotropen scharfrandig orientierbaren Flüssigkristall-Netzwerkschichten wird eine Vielzahl bekannter optischer Bauelemente auf neue Weise realisierbar. Ausserdem werden neuartige optische Bauelemente erstmals möglich.

So ist es z.B. möglich in Zellen Streifenwellenleiterstrukturen zu realisieren, strukturierte Retardierungsplatten, polarisierende Beamsplitter etc. durch Ausnutzung der Doppelbrechung zu erzeugen. Eine andere Möglichkeit besteht darin, TN-Strukturen durch Vernetzung zu fixieren und damit Polarisationsdreher zu erzeugen. Diese können sich über die gesamte Zellenfläche erstrecken; sie können aber auch auf kleinste Flächen begrenzt sein. Interessant sind Schachbrettstrukturen, bei denen jeweils benachbarte Felder in der Grösse eine Bildpunktes die Polarisation des Lichtes z.B. entweder um 90 Grad drehen oder nicht beeinflussen. Wie bereits in der schweizerischen Patentanmeldung Nr. 2245/91 beschrieben, lassen sich auf diese Weise dreidimensionale TV-Flüssigkristallbildschirme realisieren.

Eine andere Anwendung sind 3D-Dias für Strichgrafiken. Hierbei werden zunächst die beiden mit PPN beschichteten Substrate mit linear polarisiertem UV-Licht bestrahlt und dann in einem zweiten Belichtungsschritt die beiden Teilbilder für das rechte bzw. linke Auge mit linear polarisiertem UV-Licht, dessen Polarisationsrichtung +45 bzw. -45 Grad gegenüber der ersten Bestrahlung gedreht ist, in eine der PPN-Schichten eingeschrieben. Mit diesen Substraten wird eine Flüssigkristallzelle gebaut und mit vernetzbaren LC-Monomeren dieser Erfindung gefüllt. Die durch die PPN-Orientierungsschichten induzierte Struktur wird durch Vernetzen fixiert. Es entsteht eine optische Struktur, die linear polarisiertes Licht, das parallel oder senkrecht zur Polarisationsrichtung der ersten Bestrahlung polarisiert ist, ausserhalb der Bildkonturen unbeeinflusst transmittiert, während es durch die Kontur des einen Teilbildes um +45 Grad und durch die Kontur des anderen Teilbildes um -45 Grad verdreht wird, Dadurch werden beim Betrachten der Zelle mit einer geeigneten Polarisationsbrille die beiden Teilbilder vom rechten bzw. linken Auge getrennt wahrgenommen und damit 3D-Effekte erzielt.

Wie in den Beispielen beschrieben, kann die strukturierte vernetzte Schicht als Beschichtung eines Substrates realisiert werden. Dies gelingt durch sog. Spincoating der vernetzbaren LC-Monomere auf mit PPN beschichteten Substraten oder aber durch Präparieren der vernetzten Schicht in einer Zelle und anschliessendem Abtrennen eines Substrats.

Eine solche Beschichtung kann nun ihrerseits beispielsweise als Orientierungsschicht für LCDs dienen; auf diese Weise werden auf engstem Raum die Eigenschaften Orientierung und Doppelbrechung vereinigt. Hierbei sind zwei Ausführungsformen möglich.

Entweder induziert die orientierte anisotrope Netzwerkbeschichtung selbst eine Orientierung auf die angrenzende LC-Schicht. In diesem Fall sind das Orientierungsmuster der LC-Schicht und das Doppelbrechungsmuster der Netzwerkschicht korreliert, oder der orientierten Netzwerkbeschichtung wird, wie bei einer konventionellen Orientierungsschicht, durch Reiben eine von der Struktur der Netzwerkbeschichtung unabhängige Orientierungsrichtung aufgeprägt. In diesem Fall sind die optischen Eigenschaften der LC-Schicht von der der Netzwerkbeschichtung unabhängig.

Ferner kann auf die orientierte Netzwerkbeschichtung eine weitere Schicht aufgebracht werden. Zum Beispiel ist es möglich, eine transparente leitende Schicht (ITO) aufzusputtern ohne die Netzwerkbeschichtung zu schädigen. Diese Möglichkeiten sind für die Displaytechnologie von grosser Bedeutung. Insbesondere können Retardierungsschichten, wie sie bei STN-Displays notwendig sind, in das Display integriert werden.

Ein weiterer Aspekt der Erfindung besteht darin, den vernetzbaren Monomeren dichroitische Farbstoffe zuzumischen, die parallel zu den orientierten Monomeren ausgerichtet werden. Dadurch werden örtlich strukturierte dichroitische Filter und dichroitische Polarisatoren realisierbar. Eine spezielle Anwendung stellen strukturierte dichroitische Beamsplitter dar. Besonders geeignet sind dichroitische Farbstoffmoleküle, die eine funtionelle Gruppe aufweisen, welche es ermöglicht, den Farbstoff in das Netzwerk einzubauen. Ein Beispiel sind Farbstoffe mit einer Acrylatkopfgruppe, die in das Netzwerk von LC-Diacrylaten eingebaut werden.

Ebenso ist es möglich, chirale Moleküle den vernetzbaren Monomeren zuzumischen oder funktionalisierte chirale Moleküle in das Netzwerk einzubauen. Durch geeignete Wahl der chiralen Moleküle und deren Konzentration können helikale Strukturen induziert werden, die als cholesterische Filter oder optische Retarder wirken.

Ein weiterer Aspekt der Erfindung besteht darin, den vernetzbaren LC-Monomeren funktionalisierte LC-Moleküle mit starkem permanentem axialem oder lateralem Dipolmoment zuzumischen. Dadurch kann die Orientierungswirkung der PPN-Schicht durch ein äusseres elektrisches Feld verstärkt oder auf andere Weise beeinflusst werden. Hierdurch wird unter anderem die Möglichkeit eröffnet, über die Schichtdicke hinweg die Direktororientierung der LC-Schicht von einer homogenen Orientierung an der einen Grenzschicht in eine homöotrope Orientierung an der anderen Grenzschicht zu überführen.

Eine besonders wichtige Anwendung besteht darin, durch geeignete Wahl der Schichtdicke und/oder der Richtung und Stärke des äusseren magnetischen oder elektrischen Feldes Orientierungsschichten mit einem vorgegebenen Kippwinkel zu erzeugen, wie sie in LC-Displays erforderlich sind.

### Beispiel 1

Eine 1 prozentige Lösung PPN1 in NMP wird auf zwei mit ITO beschichteten Glasplatten aufgeschleudert. Spinparameter: 4000 UpM, 2 Stunden bei 130°C auf der Wärmebank vorgetrocknet, dann weitere 4 Stunden bei 180°C im Vakuum getrocknet.

Beide beschichteten Platten werden mit dem linear polarisierten Licht eine 400 W Hg Höchtsdrucklampe 1/2 Stunde bei 25°C bestrahlt. Dann wird aus diesen Substraten eine LC-Zelle von 10 mu Dicke gefertigt, wobei die Platten so angeordnet werden, dass sie bezüglich der Polarisationsrichtung der Bestrahlung senkrecht zueinander orientiert sind.

Die Zelle wird bei 140°C mit vernetzbarem LC1 gefüllt und auf 95°C in die nematische Phase abgekühlt.

Die nematische Schicht orientiert in der Zelle und nimmt TN-Konfiguration ein, wie es durch die Präparation der Orientierungsschichten vorgegeben ist.

Die orientierte Zelle wird bei 90°C einige Minuten dem unpolarisierten Licht einer 100 W Hg Höchstdrucklampe ausgesetzt. Dabei vernetzt die LC-Schicht unter Beibehaltung der TN-Konfiguration. Damit ist die Struktur der Zelle fixiert und bleibt beim Abkühlen auf RT unverändert erhalten.

### Beispiel 2

Wie in Beispiel 1 wird eine LC-Zelle gebaut. Allerdings ist in diesem Beispiel nur eines der Substrate mit PPN beschichtet. Das zweite Substrat besitzt eine konventionelle Orientierungsschicht aus geriebenem Polyimid. Auch in diesem Fall entsteht eine TN-Zelle, wenn die Reibrichtung der Polyimidschicht parallel zur Polarisationsrichtung des für die Bestrahlung des PPN-Substrats verwendeten UV-Lichts orientiert ist.

### Beispiel 3

Wie in Beispiel 1 werden mit PPN1 beschichtete Glasplatten mit linear polarisiertem UV-Licht bestrahlt. Anschliessend wird eine der Platten durch eine Chrommaske mit linear polarisiertem UV-Licht aber um 90 Grad gedrehter Polarisationsrichtung ein zweites Mal bestrahlt. Aus den Platten wird eine LC-Zelle gebaut und wie in Beispiel 1 mit vernetzbarem LC1 gefüllt, und vernetzt. In den Bereichen der Schicht, die nur einmal belichtet wurden, entsteht wie im Beispiel 1 eine TN-Konfiguration, in den doppeltbelichteten Bereichen eine Parallelkonfiguration. Die beiden Bereiche sind scharfrandig gegeneinander abgegrenzt.

### Beispiel 4

### Dreidimensionales Diapositiv:

Wie in Beispiel 2 werden die beiden mit PPN1 beschichteten Substrate mit linear polarisiertem Licht bestrahlt und dann in einem zweiten und dritten Belichtungsschritt die beiden Teilbilder des 3d Linienobjekts, die die Information für das rechte bzw. linke Auge enthalten auf eine der beiden Substrate eingeschrieben. Dies geschieht, indem im zweiten Belichtungsschritt das eine Teilbild mit UV-Licht, dessen Polarisationsrichtung um +45 Grad gegenüber der ersten Bestrahlung gedreht ist, durch eine Maske bestrahlt wird, und im dritten Belichtungsschritt das zweite Teilbild mit um -45 Grad gedrehter Polarisation durch eine weitere Maske mit der Kontur des zweiten Teilbildes eingeschrieben wird. Anschliessend wird aus den beiden Substraten eine LC-Zelle gebaut und mit vernetzbaren LC-Monomeren dieser Erfindung gefüllt. Die durch die PPN1-Orientierungsschichten induzierte Struktur wird durch Vernetzen fixiert. Es entsteht eine optische Struktur, bei der linear polarisiertes Licht, das parallel oder senkrecht zur Polarisationsrichtung der ersten Bestrahlung polarisiert ist, ausserhalb der Bildkonturen unbeeinflusst transmittiert wird, während es im Bereich der Kontur des einen Teilbildes um +45 Grad und im Bereich des anderen Teilbildes um -45 Grad verdreht wird. Das Betrachten einer solchen Zelle mit einer geeigneten Polarisationsbrille erzeugt einen räumlichen Eindruck.

Wie im Beispiel 2 kann auch in diesem Fall das zweite, nicht strukturierte Substrat mit einer konventionellen Orientierungsschicht ausgestattet sein.

### Beispiel 5

Auf eine Substratplatte wird wie in Beispiel 1 eine PPN1 - Beschichtung aufgeschleudert, getrocknet und mit linear polarisiertem UV-Licht bestrahlt. Dann wird eine in NMP gelöste Mischung aus vernetzbaren LC-Monomeren und Photoinitiator auf diese Beschichtung aufgeschleudert und auf der Wärmebank im Dunklen getrocknet bei 140°C. Die Temperatur wird auf 90 Grad gesenkt, sodass die LC-Schicht in der nematischen Phase vorliegt. Unter Sauerstoffabschluss wird die Schicht durch ein Fenster mit UV-Licht bestrahlt und vernetzt. Die vernetzte Schicht ist gemäss der darunterliegenden PPN1-Schicht orientiert.

Im folgenden werden anhand der beiliegenden Zeichnungen weitere Ausführungsbeispiele der Erfindung beschrieben. Es zeigen
- Fig. 1: einen schematischen Schnitt durch eine sog. Retarderzelle
- Fig. 2: einen Schnitt und eine Aufsicht auf eine strukturierte sog. Retarderzelle
- Fig. 3: eine schematische Darstellung einer farbkompensierten sog. STN-Flüssigkristallanzeige
- Fig. 4: eine schematische Darstellung einer Flüssigkristallzelle zur Farbanzeige
- Fig. 5: einen Farbflächenraster der Zelle gemäss Fig. 4
- Fig. 6: einen Schnitt durch einen strukturierten sog. Polarisationsdreher
- Fig. 7: eine schematische Darstellung eines Diapositives zur dreidimensionalen Projektion
- Fig.8: eine schematische Darstellung einer Rückprojektionseinrichtung zur Widergabe von stereoskopischen Bildern
- Fig.9: eine schematische Darstellung einer Vorwärtsprojektionseinrichtung zur Widergabe stereoskopischer Bilder

Durch die photoinduzierte Orientierung und Vernetzung der LC-Monomere können transparente anisotrope Polymerbeschichtungen mit definiertem optischem Gangunterschied δ = Δn·d hergestellt werden, wobei Δn =(nₑ-nₒ) die Anisotropie der Schicht (nₑ = ausserordentlicher Brechungsindex, nₒ = ordentlicher Brechungsindex), und d die Dicke der Schicht bedeuten. Der optische Gangunterschied wird durch die Schichtdicke bestimmt und kann Werte im Bereich 0 < d < 400 nm betragen. Ferner wird die Richtung der optischen Achse der Schicht durch die bei der Orientierung des PPN verwendete Polarisationsrichtung bestimmt. Die Schwingungsrichtung kann über den Bereich 0°-180° variiert werden.

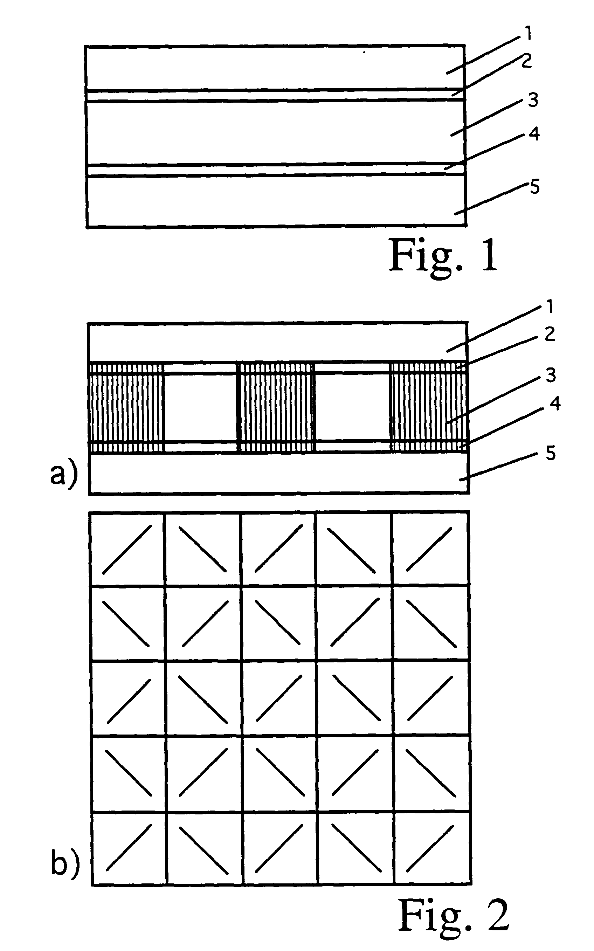

Die in Figur 1 schematisch im Schnitt gezeigte Retarderzelle besteht aus zwei im Abstand voneinander angeordneten Substraten 1,5, z.B. Glasplatten, deren einander zugewandte Flächen PPN Schichten 2,4 aufweisen. Zwischen diesen Platten befindet sich ein LC-Netzwerk 3.

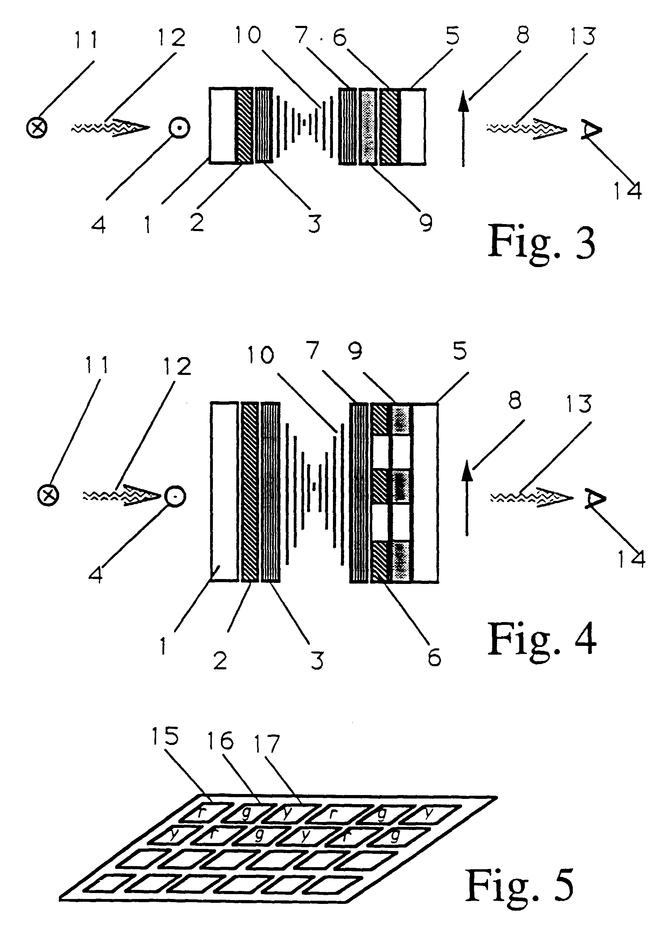

Die in Figur 2 gezeigte strukturierte Retarderzelle ist ähnlich aufgebaut und besitzt wiederum zwei Substrate 1,5. Ihre einander zugewandten Flächen sind jedoch mit strukturierten PPN-Schichten 2,4 versehen. Dazwischen befindet sich wiederum ein LC-Netzwerk 3.

Die Strukturierung ist aus der Aufsicht b ersichtlich.

Die Striche kennzeichnen die Richtung der optischen Achse der Retarderschicht.

Die Möglichkeit, Muster oder grossflächige optische Retarderschichten mit den oben beschriebenen Methoden und Materialien zu bilden, eröffnet eine Vielzahl von Möglichkeiten, neuartige Flüssigkristallanzeigen herzustellen. Die neuen Flüssigkristallanzeigen können sowohl in Transmission als auch in Reflexion betrieben werden. Als elektro-optische Effekte kommen im Prinzip alle bekannten Feldeffekte in Frage, nämlich der Twisted Nematic Effekt (TN-LCDs), Supertwisted Nematic Effekte (STN-LCDs), die Deformation aufgerichteten Phasen (DAP-LCDs), wie auch die folgenden ferroelektrischen Feldeffekte: Surface Stabilized Ferroelectric (SSF)-Effekt, Deformed Helical Ferroelectric (DHF)-Effekt und Short Pitch Bistable Ferroelectric (SBF)-Effekt.

Die in Fig. 3 schematisch gezeigte sog. STN-Zelle besteht aus zwei Glasplatten 1,5, die mit Ansteuerelektroden 2, 6 beschichtet sind. Die Elektroden sind in der Regel, d.h. wenn es sich um eine Anzeigezelle handelt, segmentiert. Die Elektrodenschicht 2 auf der in der Zeichnung links gezeigten Platte 1 ist wie üblich mit einer Orientierungsschicht 3 bedeckt, die die angrenzenden Moleküle des zwischen den Platten befindlichen Flüssigkristalls 10 in eine Vorzugsrichtung ausrichtet

Auch die rechte Platte 5 besitzt auf der dem Flüssigkristall zugewandten Oberfläche eine solche Orientierungsschicht 7. Zwischen ihr und der Elektrodenschicht 6 befindet sich aber noch eine Zwischenschicht 9 in Form einer Hybridschicht aus der Kombination einer PPN-Schicht, welche durch Bestrahlung mit linear polarisiertem Licht orientiert und gegebenenfalls strukturiert wurde, und einer darauf aufgebrachten photovernetzten LC-Schicht, die im unvernetzten Zustand durch den Kontakt mit der PPN-Schicht orientiert wurde.

Sie ist anisotrop und eignet sich daher in an sich bekannter Weise als Retarderschicht zur Farbkompensation von STN-Zellen. Besonders vorteilhaß ist aber bei der vorliegenden Hybridschicht, dass ihre anisotropen Eigenschaften durch die Herstellungsbedingungen bei der Bestrahlung mit UV-Licht in weiten Grenzen beeinflusst werden können. Der optische Gangunterschied der Schicht 9 und die Richtung der Hauptachse des Doppelbrechungsellipsoids Δn können auf diese Weise exakt so ausgebildet werden, dass optimale Farbkompensation stattfindet.

Die Schicht 9 kann, anstatt einheitlich zu sein, auch strukturiert sein, d.h. ihre optischen Eigenschaften können in verschiedenen Flächenbereichen unterschiedlich sein. Auf diese Weise ist es z.B. möglich, Flächenbereiche mit Farbkompensation, d.h. also Schwarz-Weiss-Kontrast, abzuwechseln mit solchen, die nicht kompensiert, d.h. also farbig sind.

Anstelle einer Hybridschicht 9 auf einer der beiden Platten ist es auch möglich auf beiden Platten solche Retarderschichten vorzusehen. Dies ist wichtig im Reflexionsbetrieb der Flüssigkristallzelle.

Die hybride Retarderschicht 9 kann auch zwischen der Glasplatte 1 und der Elektrodenschicht 2 angeordnet sein. Dies ist dann von besonderem Interesse, wenn die Schichtdicke der Retarderschicht 9 sich elektrisch nicht auswirken, d.h. beim Anlegen einer Spannung an die Elektroden kein Spannungsabfall über die Schicht 9 entstehen soll.

Die hybride Retarderschicht 9 kann auch auf die äussere(n) Substratoberfläche(n) 1,5 aufgebracht werden.

Die Orientierungsschichten 3,7 können ihre Orientierungswirkung konventionell durch Schrägbedampfung oder durch Reiben erhalten. Es ist aber auch möglich für die Orientierungsschichten PPN-Schichten zu verwenden.

Die in Fig. 3 gezeigte Flüssigkristallanzeigezelle wird komplettiert durch einen linearen Eingangspolarisator 4 und einen linearen, zum ersteren gekreuzt angeordneten Ausgangspolarisator 8. Bekanntlich ist es auch möglich, anstelle der Linearpolarisatoren Zirkularpolarisatoren einzusetzen.

Von einer Lichtquelle 11 kommendes unpolarisiertes Licht 12 wird vom Polarisator 4 in Richtung senkrecht zur Zeichenebene linear polarisiert und wird beim Durchlaufen des Flüssigkristalls in dessen gezeigtem ausgeschaltetem Zustand durch Zerlegung und teilweise Drehung in elliptisch polarisiertes Licht umgewandelt. Ohne die Schicht 9 wäre dieses Licht infolge der wellenlängenabhängig verschiedenen Laufzeit im Flüssigkristall 10 farbig. Die Schicht 9 bewirkt in an sich bekannter Weise eine Farbkompensation, so dass sich ein Schwarz-Weiss-Kontrast zwischen einund ausgeschaltetem Zustand ergibt. Der Ausgangspolarisator 8 lässt den parallel zu seiner Polarisationsrichtung schwingenden Teil 13 des Lichts zum Beobachter 14 durch. Im eingeschalteten Zustand und beim Betrieb der STN-Zelle im positiven Kontrast Mode wird der Flüssigkristall 10 für das durchgehende Licht optisch einachsig, so dass die lineare Polarisation bestehen bleibt und der Ausgangspolarisator 8 das Licht sperrt. Der Beobachter 14 sieht kein Licht.

Anstatt den optischen Gangunterschied und die Lage des Doppelbrechungsellipsoids der optischen Retarderschicht so zu wählen, dass die inhärente Farbigkeit von STN-Anzeigezellen kompensiert wird, können diese Werte in Zusammenwirkung mit den Polarisatorstellungen so gewählt werden, dass mit der Zelle nach Fig. 3 Farben erzeugt werden können.

Es ist bekannt, dass sowohl bei optisch bistabilen Feldeffekten, als auch bei solchen mit Graustufen, die den Effekten zugrundeliegenden Eigenschaften (Wave Guiding, Doppelbrechung) mit geeigneten Polarisatorstellungen zu Erzeugung von Farben verwendet werden können. Diese Interferenzfarben können durch zusätzliche Retarderschicht(en) beeinflusst werden. Durch die bereits erwähnte Möglichkeit der Strukturierung der Retarderschicht hinsichtlich ihrer optischen Eigenschaften, d.h. Muster mit unterschiedlichen Gangunterschieden und Lage des Doppelbrechungsellipsoids in verschiedenen Flächenbereichen, sind unterschiedliche nebeneinanderliegende Farbflächen möglich.

Ein Beispiel für eine Farbanzeige mit verschiedenfarbigen Bildpunkten, die in einem regelmässigen Raster nebeneinander angeordnet sind, ist in den Fig. 4 und 5 schematisch dargestellt.

Die in Fig. 4 schematisch im Schnitt gezeigte Anzeigezelle ist weitgehend gleich aufgebaut wie die Zelle nach Fig. 3. In Unterschied zu Fig. 3 sind die Retarderschicht 9 und die Elektrodenschicht 6 miteinander vertauscht. Ausserdem sind diese beiden Schichten entsprechend einem Raster in Einzelflächen aufgeteilt. In der Aufsicht ergibt sich für die Elektrodenschicht 6 und die Retarderschicht 9 das in Fig. 5 gezeigte Bild mit zeilen- und spaltenförmig angeordneten Bildpunkten (Pixel).

Für eine Farbdarstellung wird die Retarderschicht z.B. so ausgebildet, dass sich im Bereich des linken oberen Bildpunktes 15 rot, im Bereich des rechts danebenliegenden Bildpunktes 16 grün, im Bereich des nächsten Bildpunktes 17 der Zeile gelb und danach wieder rot ergibt. In der nächsten Zeile sind die Farben um einen Schritt seitlich verschoben.

Die unterschiedlichen optischen Gangunterschiede der optischen Retarderschicht(en) in den verschiedenen Bereichen können durch unterschiedliche Dauer (Belichtungszeit) der Lichteinstrahlung während der Polymerisation oder durch unterschiedliche Intensität des polymerisierenden Lichtes hergestellt werden.

Zusätzlich können, wie bereits erwähnt, durch sequentielle Bestrahlung auch die Wandorientierungsschichten in Rasterform mit unterschiedlichen Orientierungsrichtungen herstellt werden. Damit kann auch die relative Lage der nematischen Direktoren bezüglich der Polarisatoren für jeden Bildpunkt variiert werden. Im Zusammenwirken mit den Bildpunkt spezifischen optischen Eigenschaften der Retarderschicht(en) können sehr vielfältige Farbwirkungen erzielt werden.

Die optischen Retarderschichten können auch anders als in Fig. 4 gezeigt zwischen Elektrodenschichten und Wandorientierungsschichten oder auf den Aussenseiten der Glasplatten angebracht werden.

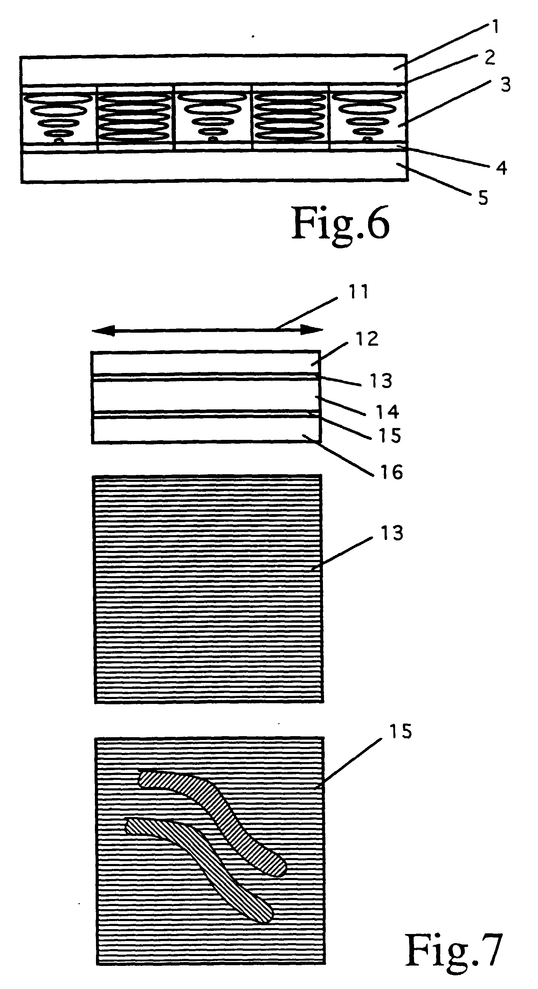

Der in Figur 6 gezeigte strukturierte Polarisationsdreher besteht aus zwei im Abstand voneinander angeordneten Substrat 1,5, deren einander zugewandte Flächen mit strukturierten PPN-Schichten 2,4 versehen sind. Dazwischen befindet sich eine strukturierte LC-Netzwerkschicht 3, bestehend aus einem Raster von TN- und Parallelzellen.

Das in Figur 7 schematisch gezeigte dreidimensionale Diapositiv besteht aus einem Linearpolarisator 11 und einer Zelle aus zwei parallelen Substraten 12, 16 mit einer einheitlich orientierten PPN-Schicht (nicht strukturiert) auf einem Substrat 12 und einer strukturierten PPN-Schicht auf dem anderen Substrat 16. Dazwischen befindet sich eine LC Netzwerkschicht 14, die orientiert ist gemäss den Orientierungsschichten 13, 15.

Die beiden Aufsichten zeigen die Orientierungsrichtungen der eingangsseitigen Orientierungsschicht 13 und der ausgangsseitigen Orientierungsschicht 15.

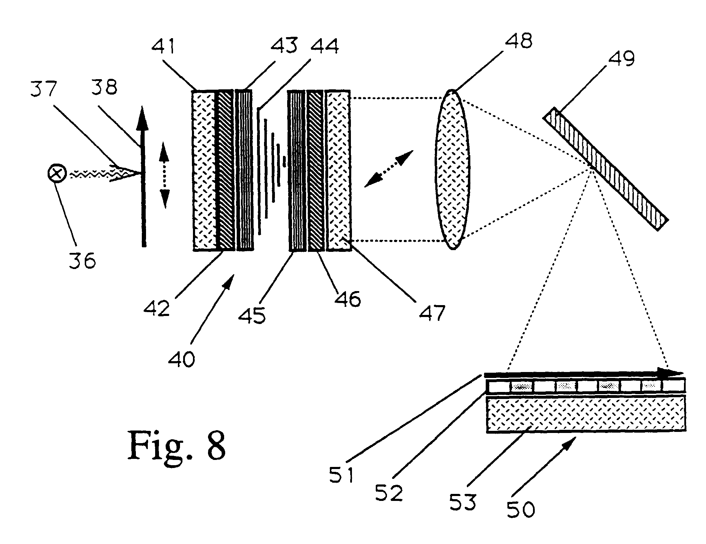

Die Rückstereoprojektionseinrichtung gemäss Fig. 8 enthält im Weg des von einer Lichtquelle 36 kommenden Lichtes 37 zunächst einen Linearpolarisator 38, der das Licht parallel zur Zeichenebene polarisiert. Dahinter befindet sich ein TN-LCD 40 bis 47, das mit einer Vielzahl ansteuerbarer Pixel (z.B. in Form einer Matrix quadratischer Segmente) ausgestattet ist. Jeweils benachbarte Pixel enthalten die Bildinformation für das rechte bzw. linke Auge. Im ausgeschalteten Zustand verlässt das Licht die Zelle mit einer um 90° gedrehten Polarisationsrichtung. Das Licht gelangt nun zu einer Fokussierungsoptik 48 und zu einem Spiegel 49. Der Spiegel 49 lenkt das Licht auf einen Projektionsschirm 50, der sich in der Bildebene befindet. Dieser besteht auf einem Linearpolarisator 51 und einer strukturierten Polarisationsdreherschicht, die auf einem diffusen transparenten Substrat aufgebracht ist. Dabei ist die Struktur so dimensioniert, dass jeweils das Bild eines Pixels ein Strukturelement der Schicht ausfüllt. Benachbarte Strukturelemente sind als TN- bzw. als Parallelzellen ausgebildet. Auf diese Weise wird die Bildinformation beispielsweise für das rechte Auge bezüglich ihrer Polarisation um 90° gedreht, während die Bildinformation für das linke Auge ihren Polarisationszustand beibehält. Mit einer geeigneten Polarisationsbrille wird der räumliche Eindruck sichtbar.

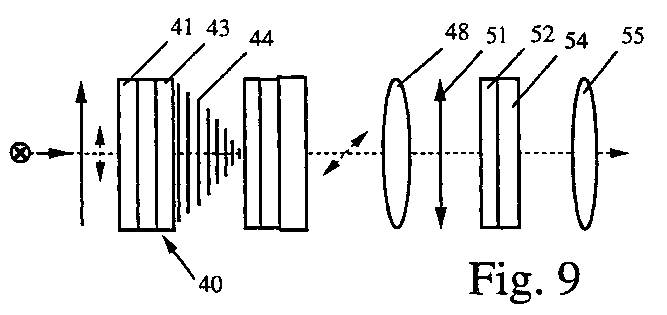

Die in Figur 9 gezeigte Stereovorwärtsprojektionseinrichtung lässt sich in analoger Weise realisieren. In diesem Fall wird die strukturierte Polarisationsdrehersicht 52, die sich in der Bildebene der ersten Abbildung befindet, auf ein transparentes Substrat 54 aufgebracht. Mit einer zweiten Optik 55 wird diese Ebene auf eine polarisationserhaltende Projektionswand projiziert.

## Patentansprüche

1. Optisches Bauelement mit einer anisotropen Schicht (9) vernetzter flüssigkristalliner Monomere mit lokal unterschiedlicher Orientierung der Flüssigkristallmoleküle, gekennzeichnet durch eine mit der Flüssigkristallschicht in Kontakt befindliche Orientierungsschicht aus einem photoorientierbaren Polymernetzwerk (PPN).

2. Optisches Bauelement nach Anspruch 1, dadurch gekennzeichnet, dass die Orientierungsschicht in lokal begrenzten Bereichen unterschiedliche Orientierung der Polymermoleküle aufweist.

3. Optisches Bauelement nach Anspruch 2, dadurch gekennzeichnet, dass die Richtung der optischen Achse der anisotropen Schicht entsprechend der Orientierung der Polymermoleküle der Orientierungsschicht variiert.

4. Verfahren zur Herstellung eines optischen Baulements nach Anspruch 1, dadurch gekennzeichnet, dass die flüssigkristallinen Monomere durch die Wechselwirkung mit der PPN-Schicht orientiert und die Orientierungen in einem anschliessenden Vernetzungsschritt fixiert werden.

5. Verfahren nach Anspruch 4, dadurch gekennzeichnet, dass die Vernetzung durch Bestrahlung mit Licht ausgeführt wird.

6. Verfahren nach Anspruch 4, dadurch gekennzeichnet, dass die vernetzbaren Monomere Diacrylate und das Material der Orientierungsschicht Cinnamatderivate sind.

7. Verfahren nach Anspruch 4, dadurch gekennzeichnet, dass die Vernetzung in einer Zelle aus zwei parallelen Orientierungsschichten erfolgt.

8. Verfahren nach Anspruch 7, dadurch gekennzeichnet, dass nach der Vernetzung eine der beiden Orientierungsschichten entfernt wird.

9. Verfahren nach Anspruch 4, dadurch gekennzeichnet, dass ein mit PPN beschichtetes Substrat durch Mehrfachbelichtung mit linear polarisiertem UV-Licht unterschiedlicher Polarisationsrichtung selektiv strukturiert wird, und dann das vernetzbare LC-Material durch Spincoating oder Tauchverfahren aufgebracht, orientiert und vernetzt wird.

10. Verfahren nach einem der Ansprüche 4 bis 9, dadurch gekennzeichnet, dass als vernetzbares LC- Material Mischungen aus mehrfach funktionalisierten LC-Monomeren und funktionalisierten dichroitischen Chromophoren verwendet werden.

11. Verfahren nach einem der Ansprüche 4 bis 9, dadurch gekennzeichnet, dass als vernetzbares LC-Material Mischungen aus mehrfach funktionalisierten LC-Monomeren und chiralen Molekülen verwendet werden.

12. Verfahren nach einem der Ansprüche 4 bis 9, dadurch gekennzeichnet, dass als vernetzbares LC-Material Mischungen aus mehrfach funktionalisierten LC-Monomeren und funktionalisierten LC-Monomeren mit axialem oder lateralem permanentem Dipolmoment verwendet werden, derart dass diese Mischungen eine positive bzw. negative dielektrische Anisotropie aufweisen.

13. Verwendung eines optischen Bauelements gemäss einem der Ansprüche 1-3 als Retarderschicht.

14. Verwendung eines optischen Bauelements gemäss einem der Ansprüche 1-3 als cholesterisches Filter.

15. Verwendung eines optischen Bauelements gemäss einem der Ansprüche 1-3 als dichroitisches Filter.

16. Verwendung eines optischen Bauelements gemäss einem der Ansprüche 1-3 als dichroitischer Polarisator.

17. Verwendung eines optischen Bauelements gemäss einem der Ansprüche 1-3 als Polarisationsdreher.

18. Verwendung eines optischen Bauelements gemäss einem der Ansprüche 1-3 als Bildträgerzelle, in der die Bildinformation durch unterschiedlich orientierte Zellsegmente gespeichert ist.

19. Verwendung eines optischen Bauelements gemäss einem der Ansprüche 1-3 in einem dreidimensionalen Projektionssystem.

## Claims

1. An optical component comprising an anisotropic layer (9) of cross-linked liquid-crystalline monomers with locally varying orientation of the liquid crystal molecules, characterised by an orientation layer in contact with the liquid crystal layer and consisting of a photo-orientable polymer network (PPN).

2. An optical component according to claim 1, characterised in that the orientation layer has an orientation of the polymer molecules which differs in locally limited regions.

3. An optical component according to claim 2, characterised in that the direction of the optical axis of the anisotropic layer varies according to the orientation of the polymer molecules of the orientation layer.

4. A process for the production of an optical component according to claim 1, characterised in that the liquid-crystalline monomers are oriented by interaction with the PPN layer and the orientations are fixed in a subsequent cross-linking step.

5. A process according to claim 4, characterised in that the cross-linking is effected by irradiation with light.

6. A process according to claim 4, characterised in that the cross-linkable monomers are diacrylates and the orientation layer material is cinnamate derivatives.

7. A process according to claim 4, characterised in that the cross-linking is effected in a cell consisting of two parallel orientation layers.

8. A process according to claim 7, characterised in that one of the two orientation layers is removed after cross-linking.

9. A process according to claim 4, characterised in that a substrate coated with PPN is selectively structured by repeated illumination with linear-polarised UV light of varying polarisation direction, and then the cross-linkable LC material is oriented and cross-linked by spin-coating or immersion processes.

10. A process according to any one of claims 4 to 9, characterised in that the cross-linkable LC material used consists of mixtures of multi-functionalised LC monomers and functionalised dichroic chromophores.

11. A process according to any one of claims 4 to 9, characterised in that the cross-linkable LC material used consists of mixtures of multi-functionalised LC monomers and chiral molecules.

12. A process according to any one of claims 4 to 9, characterised in that the cross-linkable LC material used comprises mixtures of multi-functionalised LC monomers and functionalised LC monomers with an axial or lateral permanent dipole moment such that said mixtures have a positive or negative dielectric anisotropy.

13. Use of an optical component according to any one of claims 1 to 3 as a retarded layer.

14. Use of an optical component according to any one of claims 1 to 3 as a cholesteric filter.

15. Use of an optical component according to any one of claims 1 to 3 as a dichroic filter.

16. Use of an optical component according to any one of claims 1 to 3 as a dichroic polariser.

17. Use of an optical component according to any one of claims 1 to 3 as a polarisation rotator.

18. Use of an optical component according to any one of claims 1 to 3 as an image carrier cell in which the image information is stored by cell segments of different orientation.

19. Use of an optical component according to any one of claims 1 to 3 in a three-dimensional projection system.

## Revendications

1. Composant optique comprenant une couche anisotrope (9) de monomères cristallins liquides réticulés ayant une orientation locale différente des molécules cristallines liquides, caractérisé par une couche d'orientation constituée d'une structure réticulée de polymère photo-orientable (srpp) qui se trouve en contact avec la couche de cristaux liquides.

2. Composant optique selon la revendication 1, caractérisé en ce que la couche d'orientation comporte dans des zones localement limitées une orientation différente des molécules de polymère.

3. Composant optique selon la revendication 2, caractérisé en ce que la direction de l'axe optique de la couche anisotrope varie en fonction de l'orientation des molécules de polymère de la couche d'orientation.

4. Procédé de réalisation d'un composant optique selon la revendication 1, caractérisé en ce que les monomères cristallins liquides subissent une orientation par interaction avec la couche de la srpp et les orientations subissent une fixation au cours d'une étape ultérieure de réticulation.

5. Procédé selon la revendication 4, caractérisé en ce que la réticulation est effectuée par irradiation de lumière.

6. Procédé selon la revendication 4, caractérisé en ce que les monomères réticulables sont des diacrylates et la matière de la couche d'orientation consiste en des dérivés de cinnamate.

7. Procédé selon la revendication 4, caractérisé en ce que la réticulation a lieu dans une cellule formée de deux couches parallèles d'orientation.

8. Procédé selon la revendication 7, caractérisé en ce que l'une des deux couches d'orientation est enlevée après la réticulation.

9. Procédé selon la revendication 4, caractérisé en ce qu'un substrat revêtu de la srpp subit une structuration sélective par plusieurs éclairages par une lumière UV polarisée linéairement à orientation différente de polarisation et ensuite la matière réticulable des cl est déposée, orientée et réticulée par revêtement par centrifugation ou par une méthode d'immersion.

10. Procédé selon l'une des revendications 4 à 9, caractérisé en ce que la matière réticulable des cl qui est utilisée consiste en des mélanges de monomères de cl fonctionnalisés plusieurs fois et de chromophores dichroïques fonctionnalisés.

11. Procédé selon l'une des revendications 4 à 9, caractérisé en ce que la matière réticulable des cl qui est utilisée consiste en des mélanges de monomères de cl fonctionnalisés plusieurs fois et de molécules possédant le pouvoir rotatoire.

12. Procédé selon l'une des revendications 4 à 9, caractérisé en ce que la matière réticulable des cl qui est utilisée consiste en des mélanges de monomères de cl fonctionnalisés plusieurs fois et de monomères de cl fonctionnalisés ayant un moment dipolaire permanent axial ou latéral de manière que les mélanges présentent une anisotropie diélectrique positive ou négative.

13. Utilisation d'un composant optique selon l'une des revendications 1-3 en couche retardatrice.

14. Utilisation d'un composant optique selon l'une des revendications 1-3 en filtre cholestérique.

15. Utilisation d'un composant optique selon l'une des revendications 1-3 en filtre dichroïque.

16. Utilisation d'un composant optique selon l'une des revendications 1-3 en polariseur dichroïque.

17. Utilisation d'un composant optique selon l'une des revendications 1-3 en rotateur de polarisation.

18. Utilisation d'un composant optique selon l'une des revendications 1-3 en cellule porteuse d'image dans laquelle l'information d'image est mémorisée par des segments de cellule orientés différemment.

19. Utilisation d'un composant optique selon l'une des revendications 1-3 dans un système de projection tridimensionnelle.
